## Europäisches Patentamt

## European Patent Office

## Office européen des brevets

(19)

(11) Veröffentlichungsnummer **0 029 544**
**B1**

(12) **EUROPÄISCHE PATENTSCHRIFT**

(45) Veröffentlichungstag der Patentschrift:
08.08.84

(21) Anmeldenummer: 80106934.5

(22) Anmeldetag: 10.11.80

(51) Int. Cl.³: **H 02 K 9/193**, H 02 K 9/20, H 02 K 55/04

(54) Nachfülleinrichtung einer Anordnung zur Kühlung der supraleitenden Erregerwicklung einer elektrischen Maschine.

(30) Priorität: 26.11.79 DE 2947592

(43) Veröffentlichungstag der Anmeldung:
03.06.81 Patentblatt 81/22

(45) Bekanntmachung des Hinweises auf die Patenterteilung:
08.08.84 Patentblatt 84/32

(84) Benannte Vertragsstaaten:
CH FR GB LI

(56) Entgegenhaltungen:
DE - A - 1 463 946
DE - A - 2 742 477
DE - B - 2 713 885
GB - A - 2 025 706
US - A - 4 082 967
US - A - 4 123 677

IEEE TRANSACTIONS ON POWER APPARATUS AND SYSTEMS, Band PAS-98, Nr. 6, Nov./Dez. 1979, Seiten 2241-2250 New York, U.S.A. J.H. PARKER JR. et al.: "Design of large superconducting turbine generators for electric utility application" und F 78 281-8 Cryogenics, April 1977, Seiten 201 bis 208

(73) Patentinhaber: SIEMENS AKTIENGESELLSCHAFT, Berlin und München Wittelsbacherplatz 2, D-8000 München 2 (DE)

(72) Erfinder: Weghaupt, Erich, Rathenaustrasse 10, D-4330 Müllheim (Ruhr) (DE)
Erfinder: Schnapper, Christoph, Dr., Lachnerstrasse 63, D-8520 Erlangen (DE)
Erfinder: Intichar, Lutz, Dr., Max-Busch-Strasse 12, D-8520 Erlangen (DE)

## Beschreibung

Die Erfindung bezieht sich auf eine Nachfülleinrichtung für die Kühlanordnung einer supraleitenden Erregerwicklung im Läufer einer elektrischen Maschine, insbesondere eines Turbogenerators, mit einem Kühlmittelzuleitungssystem, das eine mitrotierende Vorkammer enthält, in der im Normalbetriebszustand der Maschine eine flüssige und eine gasförmige Phase eines von einem äußeren Kühlmittelvorratsbehälter entnommenen, über eine Kühlmittelzuführungsleitung mit Überdruck eingeleiteten Kühlmittels vorhanden sind, wobei die Einmündungsstelle der Kühlmittelzuführungsleitung in einem äußeren, achsfernen Bereich der Vorkammer innerhalb der flüssigen Phase auf einem vorbestimmten Radius bezüglich der Rotationsachse des Läufers liegt, welches Kühlmittelzuleitungssystem mit einer nachgeordneten, mitrotierenden Mischkammer verbunden ist, die im Normalbetriebszustand der Maschine bei Unterdruck eine gasförmige und eine flüssige, die Erregerwicklung kühlende Phase des Kühlmittels enthält, und das eine Einrichtung zum Abbau des Druckunterschiedes zwischen der Vorkammer und der Mischkammer aufweist. Eine derartige Nachfülleinrichtung ist der US-A-4 082 967 zu entnehmen.

Diese bekannte Nachfülleinrichtung ist Teil einer Kühlanordnung, mit der eine Überflutungskühlung bzw. Badkühlung der supraleitenden Wicklung einer elektrischen Maschine, insbesondere eines Turbogenerators, nach dem Thermosiphon-Kühlprinzip ermöglicht wird. Dementsprechend enthält die Kühlanordnung eine mitrotierende Mischkammer, in der sich ein Zweiphasengemisch aus flüssigem und gasförmigem Kühlmittel befindet. Im Betriebszustand bei Rotation werden die Phasen dieses Zweiphasengemisches durch die auf sie einwirkenden zentrifugalen Kräfte getrennt, und es lagert sich der Kühlmitteldampf in achsnahen und die Kühlmittelflüssigkeit in achsfernen Bereichen der Mischkammer an. Das in achsfernen Bereichen der Mischkammer angelagerte flüssige Kühlmittel wird zur Kühlung der Erregerwicklung herangezogen, wobei ein auf Dichteunterschieden beruhender, sogenannter Selbstpump-Effekt in Thermosiphon-Kühlschleifen ausgenutzt wird.

Kühlanordnungen mit derartigen Kühlschleifen sind z. B. in der Literaturstelle »Cryogenics«, Juli 1977, Seiten 429 bis 433 oder in der DE-A-2 530 100 näher beschrieben. So kann ein sich durch die Erregerwicklung im wesentlichen achsenparallel erstreckendes System von Kühlmittelleitungen vorgesehen werden, das über radial verlaufende Kühlmittelverbindungsleitungen außerhalb der Erregerwicklung an den radial außenliegenden Bereich der Mischkammer angeschlossen ist. Im Betriebszustand der Maschine, d. h. bei Rotation des Läufers, werden alle Kühlmittelleitungen der Erregerwicklung vollständig mit flüssigem Helium überflutet und durchdrungen. Da das Kühlmittel in der Erregerwicklung aufgrund der dort auftretenden Verlustleistungen und durch von außen eingeleitete Wärmemengen erwärmt wird, nimmt seine Dichte entsprechend ab, und es wird so eine Strömung in Richtung auf die Mischkammer hin angefacht. Zugleich strömt kälteres und somit dichteres Kühlmittel radial nach außen in das Kühlmittelleitungssystem der Erregerwicklung nach. Das längs dieser Kühlmittelleitungen durch die Wicklung aufgrund örtlich entstehender oder von außen eingeleiteter Wärmemengen ausgebildete Druckgefälle führt somit zu Konvektionsströmungen in Kühlschleifen, die als Thermosiphon-Schleifen bezeichnet werden. Diese Zirkulationsströmung ist um so stärker, je größer die von dem Kühlmittel aufgenommenen Wärmemengen sind. Die Erregerwicklung läßt sich somit eigensicher kühlen.

Der zentral in der Mischkammer angelagerte Kühlmitteldampf wird zweckmäßig zu einer Gegenstromkühlung von die Erregerwicklung tragenden Verbindungselementen des Läuferkörpers verwendet. Hiermit läßt sich die eingeleitete Wärme erheblich reduzieren. Dabei erwärmt sich der Dampf von wenigen Grad Kelvin auf annähernd Raumtemperatur und wird spezifisch leichter. Da die Aufwärmung auf großem Radius stattfindet, der Eintritt des kalten Gases jedoch in Nähe der Rotationsachse erfolgt, wirkt der Gegenstromkühler gleichzeitig als Pumpe. Hält man den Austrittsdruck mit Rücksicht auf leichte Abdichtbarkeit mit beispielsweise 1,1 bar konstant, so liefert diese Pumpe einen Unterdruck in der Mischkammer des Läufers, der beispielsweise zwischen 0,3 und 0,6 bar liegt. Aus der Siedekennlinie des Heliums folgt daraus eine Temperaturabsenkung um etwa 1 K und somit eine entsprechend höhere Stromtragfähigkeit der supraleitenden Wicklung.

Bei einer solchen Kühlanordnung muß das Kühlmittel mit entsprechend niedrigem Druck und niedriger Temperatur nachgefüllt werden. Hierzu kann z. B. eine Kälteanlage vorgesehen werden, die unterkühltes Helium liefert. Neben der Tatsache, daß eine solche Anlage deutlich höheren Aufwand erfordert als eine Anlage, die mit Normaldruck arbeitet, bereitet die Vorratshaltung von unterkühltem Helium erhebliche Schwierigkeiten. Außerdem treten Schwierigkeiten bei allen Dichtungen auf, da die kalten Leitungsteile wegen des Unterdruckes warmes Gas aus der Umgebung ansaugen.

Aufgrund dieser Schwierigkeiten hat man mitrotierende Druckabbaustufen vorgesehen, damit die Kälteanlage und die Kühlmittelzuleitungsteile mit einem optimalen Druck von etwa 1,2 bar betrieben werden können. Eine entsprechende Druckabbaustufe ist z. B. bei der Einrichtung zum Nachfüllen von Helium aus einem Helium-Vorratsbehälter in ein Heliumbad im Läufer eines supraleitenden Generators vorgesehen, die in der Literaturstelle »Cryogenics«, April 1977, Seiten 201 bis 208 angedeutet ist und deren konstruktive Einzelheiten aus der eingangs genannten US-A-4 082 967 näher hervorgehen. Bei dieser Einrichtung ist in einem Kühlmittelzuleitungssystem eine mitrotierende Vorkammer vorgesehen, die sich radial nach außen praktisch bis zum Außenumfang des kalten Läuferteils erstreckt und in die von außen über eine ebenfalls mitrotierende Kühlmittelzuführungsleitung Helium zweiphasig mit von außen zu regelndem Überdruck eingeleitet wird, wobei nur die Zufuhr eines dünnen Flüssigkeitsstrahles vorgesehen ist. Die Kühlmittelzuführungsleitung enthält einen zentral angeordneten Leitungsteil, der in einen radial verlaufenden Leitungsteil übergeht. Bei Rotation des Läufers wird in der Vorkammer in achsnahen Bereichen das gasförmige und in achsfernen Bereichen das flüssige Kühlmittel angelagert, so daß diese Kammer einen Phasenseparator darstellt. In der Vorkammer herrscht ein Unterdruck, da die gasförmige Phase zur Kühlung von Teilen des Läuferkörpers abgesaugt wird. Bei dieser Einrichtung wird der Druckunterschied zwischen dem Überdruck in der Zuleitung auf der Zulaufseite des zweiphasigen Kühlmittels und dem Unterdruck in dem rotierenden Heliumbad der Mischkammer für die Erregerwicklung im wesentlichen bereits in der Vorkammer abgebaut. Hierzu gelangt das zugeführte Kühlmittel nicht unmittelbar in die Vorkammer, sondern tritt am Ende des rotierenden radialen Leitungsteils der Kühlmittelzuführungsleitung in einen dieses Ende umschließenden rinnenartigen Auffangbehälter mit U-förmigem Querschnitt. In diesem Auffangbehälter stellt sich dann ein Gleichgewicht ein, das im wesentlichen durch den Druck der gasförmigen Phase in der Zuführungsleitung und den Druck der rotierenden Flüssigkeitssäule in dem rinnenartigen Auffangbehälter bestimmt wird. Diese Flüssigkeitssäule steht ihrerseits im Gleichgewicht mit der Flüssigkeitssäule in der Vorkammer. Der Druckausgleich zwischen dem Unterdruck in der Vorkammer und dem nur noch geringfügig niedrigeren Druck in der Mischkammer wird dadurch gewährleistet, daß die Vorkammer an der Peripherie unmittelbar mit der Mischkammer verbunden ist und so sich die Flüssigkeitsspiegel in diesen Kammern entsprechend einstellen. Ein solcher Druckabbau zwischen der Kühlmittelzuführungsleitung und der Mischkammer ist nicht nur konstruktiv verhältnismäßig aufwendig, da zweierlei Pumpeinrichtungen mit verschiedenen Drücken erforderlich sind. Außerdem ist hierdurch auch die Abkühlung der Wicklung bei In-Betrieb-Nahme der Maschine erschwert.

Aufgabe der vorliegenden Erfindung ist es, bei der Nachfülleinrichtung der eingangs genannten Art die Niveauregelung in der Vorkammer der zugehörenden Kühlanordnung zu vereinfachen. Dabei soll die an sich bekannte Selbstregelung des Zuflusses von aus einem äußeren Kühlmittelvorratsgefäß entnommenem Kühlmittel in Abhängigkeit von den Verlusten des zur Kühlung der supraleitenden Erregerwicklung erforderlichen Kühlmittels gewährleistet sein.

Diese Aufgabe wird für die Nachfülleinrichtung der eingangs genannten Art erfindungsgemäß dadurch gelöst, daß eine ausschließlich flüssiges Kühlmittel führende Kühlmittelzuführungsleitung feststehend in die Vorkammer ragt, welche sich in Nähe der Läuferachse befindet, daß an der Einmündungsstelle der feststehenden Kühlmittelzuführungsleitung der hydrostatische Druck des zugeführten flüssigen Kühlmittels in Gleichgewicht mit dem Kühlmitteldruck des in der Vorkammer im Normalbetriebszustand der Maschine mitrotierenden flüssigen Kühlmittels ist und daß die Einrichtung zum Druckabbau in dem Verbindungsweg zwischen der Vorkammer und der Mischkammer angeordnet ist.

Wird der Vorkammer flüssiges Kühlmittel zur Abführung von Verlusten in der Erregerwicklung oder aufgrund von Wärmeeinstrahlung entnommen, so erzeugt dann der geringere Vorrat an flüssigem Helium bei Rotation einen entsprechend geringeren Gegendruck an der Einspeisungsstelle, die sich aufgrund ihres vorbestimmten Radius in dem radial außenliegenden Bereich der Vorkammer, welcher mit flüssigem Kühlmittel gefüllt ist, befindet. Das Gleichgewicht zwischen Zulaufdruck und dem Gegendruck des Vorrats an flüssigem Kühlmittel in der Vorkammer ist dann nicht mehr gegeben, d. h. der Zulaufdruck ist dann höher als der Gegendruck. Es wird folglich solange Kühlmittel in die Vorkammer nachströmen, bis die vorbestimmte Menge an flüssigem Kühlmittel wieder vorhanden und der Gleichgewichtsdruck wiederhergestellt ist. Die Vorteile der Nachfülleinrichtung gemäß der Erfindung sind somit insbesondere in einem selbstregulierenden, dem jeweiligen Bedarf an flüssigem, der Vorkammer entnommenem Kühlmittel angepaßten Kühlmittelzulauf zu sehen, wobei der Spiegel an flüssigem Kühlmittel in der Vorkammer annähernd konstant gehalten wird. Insbesondere können auch die Anforderungen in der Abkühlungs- und Aufwärmungsphase der Wicklung und insbesondere auch im Falle eines Quenches ohne weiteres erfüllt werden. Die Nachfülleinrichtung ermöglicht somit einen sicheren Betrieb der Maschine in allen Betriebszuständen.

Gemäß weiterer Ausgestaltung der Nachfülleinrichtung nach der Erfindung kann diese vorteilhaft Teil einer Kühlanordnung sein, welche eine den radial äußeren Bereich der Vorkammer mit einem am Außenumfang der supraleitenden Erregerwicklung angeordneten Kühlmittelverteilersystem verbindende Kühlmitteleinspeisungsleitung enthält, welche ferner zwischen dem Kühlmittelverteilersystem und der Mischkammer verlaufende Kühlkanäle durch die Wicklungsteile der Erregerwicklung sowie entsprechende Kühlmittelverbindungsleitungen außerhalb der Wicklungsteile aufweist, und welche außerdem mindestens eine in Achsnähe der Mischkammer angeschlossene Kühlmittelabführungsleitung enthält zur Ableitung von gasförmigem Kühlmittel aus der Mischkammer nach außen. Bei dieser Kühlanordnung kann insbesondere ein Druckabbau zwischen der Vorkammer und der Mischkammer mittels rotierender Kühlmittelsäulen radial außerhalb des Flüssigkeitsspiegels in der Vorkammer bzw. radial außerhalb des Flüssigkeitsspiegels in der Mischkammer vorgesehen sein. Mit einer solchen, mit der Nachfülleinrichtung nach der Erfindung kombinierten Kühlanordnung läßt sich eine selbstregulierende Kühlung einer supraleitenden Erregerwicklung gewährleisten.

Weitere vorteilhafte Ausgestaltungen der Nachfülleinrichtung nach der Erfindung gehen aus den restlichen abhängigen Ansprüchen hervor.

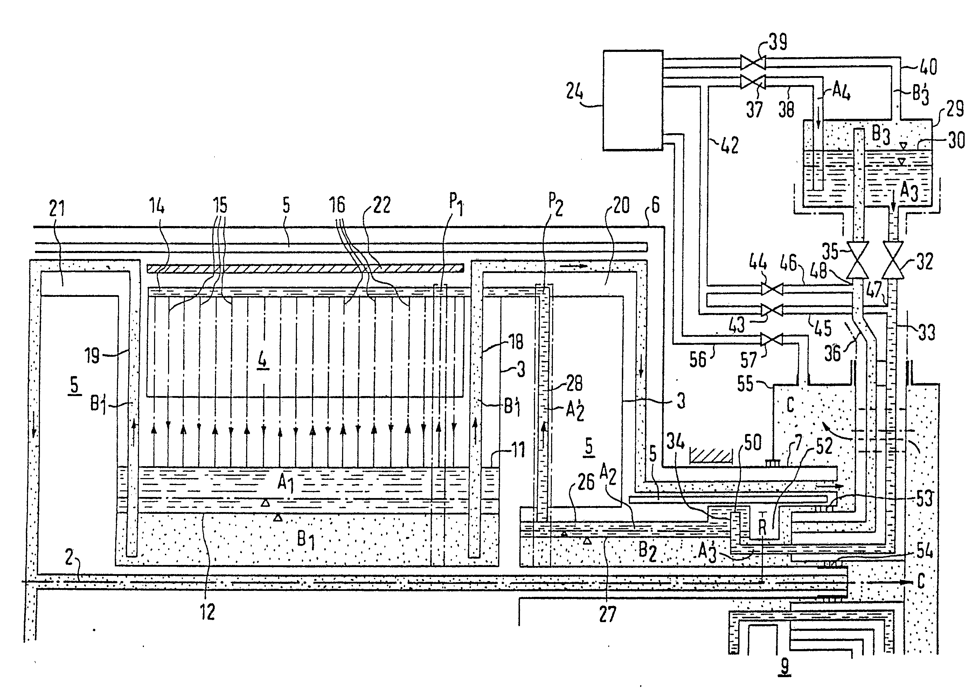

Zur nachfolgenden Erläuterung der Erfindung und deren in den abhängigen Ansprüchen gekennzeichneten Ausgestaltungen wird auf die Zeichnung Bezug genommen, in deren Figur schematisch eine Anordnung zur Kühlung der supraleitenden Erregerwicklung einer elektrischen Maschine mit einer Nachfülleinrichtung gemäß der Erfindung veranschaulicht ist.

Die in der Figur dargestellte Kühlanordnung ist für die supraleitende Erregerwicklung im Läufer einer elektrischen Maschine, insbesondere eines Turbogenerators, vorgesehen. Nicht näher ausgeführte Teile des Läufers der Maschine können dabei z. B. Teilen einer Maschine entsprechen, wie sie der DE-B 2 503 428 zu entnehmen sind. In der Figur ist nur teilweise die obere Hälfte des Läufers mit der Kühlanordnung, die eine Nachfülleinrichtung gemäß der Erfindung umfaßt, als Längsschnitt dargestellt.

Die zu kühlenden, rotierenden Teile der Maschine sollen von einem Vakuum umgeben sein, um so eine Wärmeeinleitung von außen auf diese Teile zu begrenzen. Die in der Figur nicht näher aufgeführte, in einem konzentrisch um eine Achse 2 gelagerten Läuferkörper 3 der Maschine angeordnete supraleitende Erregerwicklung 4 ist deshalb von Vakuumräumen 5 umgeben, die innerhalb eines mitrotierenden, zylindrischen Vakuumgehäuses 6 liegen, das sich auf oder über Raumtemperatur befindet. Das stirnseitige Ende 7 des Vakuumgehäuses 6 ist zugleich als Teil eines Anschlußkopfes 9 des Läufers ausgebildet. An diesem Anschlußkopf wird das zur Kühlung der Erregerwicklung erforderliche Kühlmittel in den Läufer ein- und aus diesem wieder ausgeleitet.

Die Kühlanordnung enthält eine achsnahe, rotierende Mischkammer 11, in der sich ein bei Unterdruck siedendes Bad des von außen dem Läufer zugeführten Kühlmittels befindet. Da die Leiter der Wicklung 4 supraleitendes Material enthalten, ist als Kühlmittel Helium vorgesehen. Bei Rotation des Läufers erfolgt unter Einfluß zentrifugaler Kräfte eine Phasentrennung, so daß sich in der Mischkammer 11 im Normalbetriebszustand der Maschine das schwerere flüssige Helium $A_1$ konzentrisch um das in Achsnähe gehaltene gasförmige Helium $B_1$ anlagert. Die Grenzfläche zwischen diesen beiden Phasen ist mit 12 bezeichnet.

Am Außenumfang der Erregerwicklung 4 ist ein Kühlmittelverteilersystem vorgesehen, das aus netzartig miteinander verbundenen, achsenparallel und in Umfangsrichtung des Läufers verlaufenden Kühlmittelleitungen besteht. Zwischen diesem Kühlmittelverteilersystem und der Mischkammer 11 verlaufen in der Figur nur durch Linien 15 angedeutete Kühlkanäle durch die Wicklungsteile der Erregerwicklung 4, durch welche die Wicklung kühlendes Helium strömt. Die Strömungsrichtung dieses Kühlmittels ist gemäß der Figur von dem Kühlmittelverteilersystem 14 zu der Mischkammer 11 hin angenommen und durch Pfeile an den Linien 15 veranschaulicht. Das Kühlmittelverteilersystem 14 ist außerdem über besondere, nur durch Linien 16 angedeutete Kühlmittelverbindungsleitungen mit der Mischkammer 11 verbunden. Diese Kühlmittelverbindungsleitungen liegen außerhalb der Wicklungsteile der Erregerwicklung und dienen zur Einspeisung von flüssigem Kühlmittel aus der Mischkammer 11 in das Kühlmittelverteilersystem 14. Die radial nach außen weisende Strömungsrichtung dieses Kühlmittels ist in der Figur durch Pfeile an den Linien 16 veranschaulicht.

Zur Kühlung der supraleitenden Erregerwicklung 4 ist ein Kreislauf vorgesehen, in dem ein sogenannter Selbstpump-Effekt in Thermosiphon-Schleifen ausgenutzt wird. Über die radial angeordneten Kühlmittelverbindungsleitungen 16 wird nämlich kaltes Helium $A_1$ aus der Mischkammer 11 in das Kühlmittelverteilersystem 14 gefördert und gelangt von da aus in die angeschlossenen Kühlkanäle 15 der supraleitenden Erregerwicklung 4. Aufgrund der Wärmeeinleitung von außen wird das Kühlmittel in den Kühlmittelleitungen des Kühlmittelverteilersystems 14 erwärmt. Außerdem erwärmt es sich auch durch die in den Wicklungsteilen der Erregerwicklung 4 entstehenden Verlustleistungen. Die damit verbundene Reduzierung der Dichte des Kühlmittels bewirkt eine Verminderung seines hydrostatischen Druckes gegenüber dem hydrostatischen Druck des kalten Kühlmittels in den Verbindungsleitungen 16. Aufgrund dieser Druckunterschiede fließt das Kühlmittel über die Kühlkanäle 15 radial nach innen in die Mischkammer 11 zurück, und es bilden sich Zirkulationsströmungen in den sogenannten Thermosiphon-Schleifen aus.

Die im Normalbetriebszustand der Maschine in der Mischkammer 11 sich ansammelnde, verdampfte Kühlmittelmenge $B_1$ wird über Abgasleitungen 18 und 19 nach außen abgesaugt. Auch hierbei wird ein Selbstpump-Effekt ausgenutzt. Das in Achsnähe aus der Mischkammer über die Leitungen 18 und 19 entnommene, mit $B_1'$ gekennzeichnete Kühlmittelgas wird nämlich aufgewärmt, indem es zur Kühlung von den Tieftemperaturteil tragenden Verbindungselementen des Läufers wie z. B. von Verbindungselementen 20 und 21 zwischen dem mitrotierenden, warmen Vakuumgehäuse 6 und kälteren Teilen des Läufers herangezogen wird. Ein solches kälteres

Läuferteil kann beispielsweise ein als elektromagnetischer Dämpfer wirkender, in der Figur nur angedeuteter Zylinder 22 sein. Die Kühlung der achsfernen Verbindungselemente 20 und 21, in denen das Kühlmittelgas $B_1'$ zumindest annähernd auf die Temperatur des Vakuumgehäuses 6 überführt wird, erfolgt dabei im Gegenstrom zum Wärmefluß, so daß diese Elemente auch als Gegenstromkühler angesehen werden können. Das so aufgewärmte Kühlmittelabgas kann dann zentral an dem Anschlußkopf 9 aus dem Läufer ausgeleitet und einer in der Figur nur angedeuteten Kälteanlage 24 zugeführt werden.

Die unterschiedliche Dichte zwischen kaltem und warmem Kühlmittelgas ergibt den Selbstpump-Effekt. Bei festgehaltenem Austrittsdruck führt er zu einem Unterdruck in der Mischkammer 11, der beispielsweise 0,4 bar beträgt. Damit ist eine Temperaturabsenkung des Kühlmittels um etwa 1K verbunden.

Das zur Kühlung der supraleitenden Erregerwicklung 4 erforderliche flüssige Helium wird einer mitrotierenden, in Achsnähe angeordneten Vorkammer 26 entnommen, die Teil eines Kühlmittelzuleitungssystems ist und sich z. B. in Nähe des Anschlußkopfes 9 befindet. Diese Vorkammer enthält im Normalbetriebszustand der Maschine bei Rotation flüssiges Kühlmittel $A_2$ in achsfernen Bereichen, das gasförmiges Kühlmittel $B_2$ aufgrund zentrifugaler Kräfte konzentrisch umschließt. Die Grenzfläche zwischen beiden Phasen ist dabei mit 27 gekennzeichnet. An dem achsfernen Bereich der Vorkammer 26 ist mindestens eine bezüglich der Läuferachse 2 radial verlaufende Kühlmitteleinspeisungsleitung 28 angeschlossen, über die flüssiges, mit $A_2'$ bezeichnetes Kühlmittel aus der Vorkammer dem am Außenumfang der Erregerwicklung 4 angeordneten Kühlmittelverteilersystem 14 zugeführt wird.

Die Kühlanordnung enthält vorteilhaft zwischen der Vorkammer 26 und dem Bereich der Erregerwicklung 4 eine Druckabbaustufe. Dabei ist der Druck $P_1$ des Kühlmittels am Außenumfang der Erregerwicklung 4 in dem Kühlmittelverteilersystem 14 im Gleichgewicht mit dem Druck $P_2$ am radial äußeren Ende der Einspeisungsleitung 28, da die beiden Heliumsäulen über dem Heliumspiegel 27 in der Vorkammer 26 und dem Heliumspiegel 12 in der Mischkammer 11 wegen unterschiedlicher Drücke unterschiedliche Temperaturen und damit Dichten aufweisen. Die Spiegel 27 und 12 stehen dabei in einer rückkoppelnden Beziehung, d. h. ein Absenken des Spiegels 12 in der Mischkammer 11 zu größerem Radius hin bewirkt, daß der Druck $P_1$ sinkt. Es kann dann Helium über die Einspeisungsleitung 28 der Druckabbaustufe solange nachfließen, bis sich wieder die Gleichgewichtsbedingung zwischen den Drücken $P_1$ und $P_2$ einstellt.

Mit der in der Figur ferner dargestellten Nachfülleinrichtung wird der Vorkammer 26 flüssiges, aus einem äußeren Kühlmittelvorratsbehälter 29 entnommenes Kühlmittel $A_3'$ zugeführt. In dem Vorratsbehälter, der geodätisch höher als die achsnahe Vorkammer 26 angeordnet ist, befinden sich flüssiges Kühlmittel $A_3$ und gasförmiges Kühlmittel $B_3$ bei einem Druck von etwa 1,2 bar. Die Phasengrenze zwischen flüssigem und gasförmigem Kühlmittel ist dabei mit 30 gekennzeichnet. Zwischen der Vorkammer 26 und dem Vorratsbehälter 29 ist mindestens eine erste, über ein Ventil 32 absperrbare Leitung 33 vorgesehen, die am Boden des Vorratsbehälters 29 ansetzt und welche in die Flüssigkeit $A_2$ in dem achsfernen Bereich der Vorkammer 26 mittels eines sich radial erstreckenden, feststehenden Abschnittes 34 der Leitung 33 eintaucht. Ferner ist mindestens eine weitere, über ein Ventil 35 absperrbare Leitung 36 für den Austausch von kaltem Kühlmittelgas zwischen dem oberhalb der Kühlflüssigkeit $A_3$ ausgebildeten, mit dem gasförmigen Kühlmittel $B_3$ gefüllten Gasraum in dem Vorratsbehälter 29 und dem achsnahen, mit dem Gas $B_2$ gefüllten Raum der Vorkammer 26 vorgesehen. Mit dieser Austauschleitung 36 läßt sich erreichen, daß in der Vorkammer 26 etwa derselbe Gasdruck von etwa 1,2 bar wie in dem Vorratsbehälter 29 herrscht.

Die Leitung 36 kann auch konzentrisch um die Leitung 33 für das flüssige Helium angeordnet sein, um so die thermische Isolation der das flüssige Helium führenden Leitung zu verbessern.

In den Vorratsbehälter 29 kann über eine mit einem Ventil 37 absperrbare Anschlußleitung 38 flüssiges Kühlmittel $A_4$ von der externen Kälteanlage 24 aus eingeleitet werden, während gasförmiges Kühlmittel $B_3'$ aus dem Vorratsbehälter über eine mit einem Ventil 39 absperrbare Leitung 40 in die Kälteanlage 24 zurückzuleiten ist. Ferner geht von dem zwischen dem Ventil 37 und der Kälteanlage 24 liegenden Teilstück der Anschlußleitung 38 oder von der Kälteanlage 24 direkt aus eine Kühlmittelleitung 42 ab, die sich zu zwei mit Ventilen 43 und 44 absperrbaren Leitungsstücken 45 und 46 verzweigt. Diese Leitungsstücke münden in die zwischen der Vorkammer 26 und dem Vorratsbehälter 29 verlaufenden Hauptleitungen 33 und 36, wobei die Einmündungsstellen 47 und 48 zwischen den Ventilen 32 und 35 und der Vorkammer liegen.

Mit dieser Nachfülleinrichtung läßt sich nun gewährleisten, daß stets in der Vorkammer 26 ausreichend flüssiges Helium $A_2$ vorhanden ist, auch wenn über die Einspeisungsleitung 28 der Druckabbaustufe aus der Vorkammer 26 größere Mengen an flüssigem Helium $A_2'$ in das Kühlmittelverteilersystem 14 abfließen. Hierzu muß gemäß der Erfindung die Einmündungsstelle 50 des sich radial erstreckenden Abschnittes 34 der feststehenden Kühlmittelzuführungsleitung 33, an welcher das Kühlmittel in den achsfernen Bereich der Vorkammer 26 austritt, auf einem vorbestimmten Radius R liegen, so daß an ihr der Zulaufdruck des Kühlmittels aufgrund des natürlichen Gefälles zwischen dem Vorratsbehälter 29 und der Vorkammer 26 im Gleichgewicht mit dem Kühlmitteldruck des in der Vorkammer im Normalbetriebszustand der Maschine rotieren-

den Kühlmittels $A_2$ ist. Ändert sich dann der Flüssigkeitsspiegel 27 in der Vorkammer, so ändert sich auch der Fliehkraftdruck an der Einmündungsstelle 50 der Kühlmittelzuführungsleitung 33. Wandert z. B. der Spiegel 27 an flüssigem Helium radial nach außen, dann fällt der Druck an der Einmündungsstelle 50 entsprechend, und flüssiges Helium kann in die Vorkammer 26 nachströmen. Bei Rückgang des Spiegelradius steigt hingegen der Druck an der Einmündungsstelle 50 an, und die Zufuhr an flüssigem Helium wird gestoppt. Auf diese Weise steuert sich die Zufuhr an flüssigem Helium selbsttätig. Da außerdem die auf das flüssige Helium $A_2$ in der Vorkammer einwirkende Zentrifugalbeschleunigung bei einer Drehzahl von 50/sec. und beispielsweise 5 cm Radius an der Einmündungsstelle 50 die 500fache Erdbeschleunigung beträgt, ändert sich die radiale Position des Heliumspiegels 27 mit einer Änderung des Spiegels 30 im Vorratsbehälter 29 nur sehr wenig. Ein Absinken des Spiegels 30 um 1 m verursacht nämlich ein Absinken des Spiegels 27 um beispielsweise nur 2 mm.

Somit regelt sich einerseits die Kühlmittelzufuhr völlig selbständig auf der ganzen Linie zwischen dem Vorratsbehälter 29 und der Mischkammer 11, andererseits ist der Betrieb praktisch unabhängig von der Füllhöhe in dem Vorratsbehälter 29. Damit ist die Funktion des Vorratsbehälters 29 als Speicher für flüssiges Helium gewährleistet. Das Fassungsvermögen des Vorratsbehälters ermöglicht so einen längeren Generatorbetrieb auch bei einem vorübergehenden Ausfall der Kälteanlage 24.

Gemäß dem Ausführungsbeispiel nach der Figur ist an dem einen Wellenende des Läufers in dem Anschlußkopf 9 eine sich radial erstreckende Zwischenwand 52 vorgesehen, die den Zulauf von flüssigem Kühlmittel $A_2$ aus der Vorkammer 26 in auf größerem Radius als dem der Phasengrenze 27 angeordneten Dichtungen 53 zwischen rotierenden und feststehenden Teilen des Anschlußkopfes 9 verhindert. Es ist damit gewährleistet, daß diese Dichtungen ebenso wie entsprechende achsnahe Dichtungen 54 nur den Austausch von warmem und kaltem Gas zu verhindern brauchen. Ist der Druck des kalten Gases etwas höher als der des warmen, beispielsweise 1,2 bar gegenüber 1,1 bar, so kühlt das durch die Spalte an diesen Dichtungen austretende kalte Gas die Wände nach dem Gegenstromprinzip. Hiermit werden die Verluste durch eine Wärmeeinleitung weiter reduziert.

Das an diesen Dichtungen und aus den Abgasleitungen 18 und 19 austretende warme Abgas, das mit C gekennzeichnet ist, wird in einer Sammelkammer 55 des Anschlußkopfes 9 vereinigt und von dort über eine Sammelleitung 56 der Kälteanlage 24 zugeführt. In dieser Sammelleitung kann sich ein Ventil 57 befinden.

Nachfolgend wird noch auf einzelne Betriebszustände der Maschine und ihrer Kühlanordnung mit der Nachfülleinrichtung nach der Erfindung näher eingegangen:

Im störungsfreien Normalbetrieb sind die Ventile 32 und 35 offen, während die Ventile 43 und 44 geschlossen gehalten werden. Die Kälteanlage 24 gewährleistet dabei einen ausreichenden Vorrat an flüssigem Helium $A_3$ in dem Vorratsbehälter 29. Es stellt sich dann der selbstregulierende Betrieb der Nachfülleinrichtung in Abhängigkeit von den auftretenden Verlusten ein.

Für das Abkühlen sind zwei Verfahrensvarianten möglich. Zum einen flutet man den noch warmen Läufer durch Öffnen der Ventile 32 und 35 mit flüssigem Kühlmittel $A_3$. Hierbei sind sehr kurze Abkühlzeiten zu erreichen, jedoch ist mit hohen Temperaturgradienten im Läufer zu rechnen. Außerdem wird die Kälteenergie verhältnismäßig schlecht ausgenutzt. Zum anderen kann man auch die Ventile 32, 35, 37 und 39 geschlossen halten und die Ventile 43 und 44 öffnen, wodurch die Kälteanlage 24 direkt mit den Hauptzuführungsleitungen 33 und 36 verbunden ist. Man läßt dann die Kälteanlage 24 anfangs warmes, dann zunehmend kälteres Gas liefern und kühlt somit den Läufer allmählich ab. Hierfür werden große Gasmengen benötigt, weshalb die beiden Leitungen 33 und 36 vorteilhaft parallelgeschaltet sind und somit einen ausreichenden Strömungsquerschnitt zur Verfügung stellen.

Wenn die Abkühlung soweit fortgeschritten ist, daß sich in der Vorkammer 26 flüssiges Kühlmittel $A_2$ ansammelt, werden die Ventile 43 und 44 geschlossen und dafür die Ventile 32, 35, 37 und 39 geöffnet. Nun dient der Vorrat an flüssigem Kühlmittel $A_3$ in dem Vorratsgefäß 29 dazu, den Abkühlvorgang zu beschleunigen, der sonst durch die Leistung der Kälteanlage 24 begrenzt wäre. Mit dem Erreichen des thermischen Gleichgewichts und der normalen Spiegelhöhen 12 und 27 geht dann die Kühlanordnung selbständig in den normalen Dauerbetrieb über.

Zum Aufwärmen des Läufers kann man zunächst die Drehzahl des Läufers herabsetzen, beispielsweise auf 2,25 pro Sekunde, wobei die Fliehkraft auf das flüssige Kühlmittel $A_2$ in der Vorkammer 26 gerade der Schwerkraft die Waage hält. Die Ventile 32, 35 und 44 werden dann geschlossen und das flüssige Helium $A_2$ entweder in einen geodätisch tiefer liegenden Tank geleitet oder mit einer Pumpe, die Bestandteil der Kälteanlage 24 sein kann, bei geöffneten Ventilen 43 und 37 über die Leitungen 33, 45, 42 und 38 in den Vorratsbehälter 29 gefördert. Da die Pumpwirkung der als Gegenstromkühler wirkenden Verbindungselemente 20 und 21 des Läuferkörpers wegen der geringen Drehzahl nahezu wegfällt, kehrt sich die Gasströmung in den Abgasleitungen 18 und 19 um, und der Druck im Läufer über dem Heliumspiegel 12 steigt auf etwa die 1,1 bar des Abgassystems an. Wenn nun die Pumpe in der Kälteanlage an ihrer Saugseite den Druck auf etwa 1 bar senkt, so genügt der Differenzdruck von 0,1 bar, um den ganzen Läufer von flüssigem Helium zu entleeren. Danach kann das Aufwärmen durch Einblasen von Gas durch die Leitungen 33 und 36 analog dem Abkühlvorgang erfolgen.

Bei einem sogenannten Quench geht ein Teil der Erregerwicklung 4 vom supraleitenden in den normalleitenden Zustand über. Die damit verbundene örtliche Erwärmung der Wicklung führt zu einer verstärkten Verdampfung an Helium. Aufgrund der dadurch hervorgerufenen Innendruckerhöhung wird flüssiges Helium zurück in den Vorratsbehälter 29 gefördert. Da die Leitungen 33 und 36 vorteilhaft in ihrem Querschnitt weitgehend frei wählbar sind im Gegensatz zu den Abgasleitungen 18 und 19, deren Querschnitt in den Gegenstromkühlern 20 und 21 wegen des Wärmeüberganges klein gehalten werden muß, kann der Druckabbau über das Kühlmittelzuleitungssystem weitgehend gewährleistet werden. Bei großem Innendruck im Läufer wird die Vorkammer 26 mit Flüssigkeit überflutet, und beide Leitungen 33 und 36 fördern diese Flüssigkeit gleichermaßen in den Vorratsbehälter 29 zurück, womit der Strömungswiderstand niedrig bleibt. Führt der Quench zu einer völligen Entleerung des Läufers, so stellt die Leitung 36 für das weiterhin ausströmende, zunehmend wärmer werdende Gas den kleineren Strömungswiderstand dar, da die Leitung 33 vom Vorratsbehälter her mit Flüssigkeit gefüllt bleibt. Das Gas braucht also nicht das flüssige Kühlmittel im Vorratsbehälter zu durchströmen, was zu einer zusätzlichen Verdampfung führen würde.

Ferner bewirkt die bei einem Quench hervorgerufene Druckerhöhung im Helium auch eine Temperaturerhöhung. Hierdurch wird die Ausbreitungsgeschwindigkeit der normalleitenden Zone in dem Leitermaterial der Wicklung vergrößert. Da das flüssige Helium aus dem Läufer gedrückt wird, sinkt der Heliumspiegel 12 zu größeren Radien hin; sobald die innersten Leiter der Wicklung nicht mehr mit Flüssigkeit bedeckt sind, ist ihre Kühlung soviel schlechter, daß zusätzliche normalleitende Zonen entstehen und sich die Energie daher gleichmäßiger verteilt.

Mit der Einrichtung nach der Erfindung ist somit nicht nur eine selbstregulierende Nachfüllung von Kühlmittel in die Kühlanordnung einer supraleitenden Erregerwicklung einer Maschine möglich, sondern es können mit ihr auch die Anforderungen in der Abkühlungs- und Aufwärmungsphase der Wicklung und insbesondere auch im Falle eines Quenches ohne weiteres erfüllt werden. Die Nachfülleinrichtung ermöglicht somit einen sicheren Betrieb der Maschine in allen Betriebszuständen.

**Patentansprüche**

1. Nachfülleinrichtung für die Kühlanordnung einer supraleitenden Erregerwicklung (4) im Läufer einer elektrischen Maschine, insbesondere eines Turbogenerators, mit einem Kühlmittelzuleitungssystem, das eine mitrotierende Vorkammer (26) enthält, in der im Normalbetriebzustand der Maschine eine flüssige und eine gasförmige Phase ($A_2$ bzw. $B_2$) eines von einem äußeren Kühlmittelvorratsbehälter (29) entnommenen, über eine Kühlmittelzuführungsleitung (33) mit Überdruck eingeleiteten Kühlmittels vorhanden sind, wobei die Einmündungsstelle (50) der Kühlmittelzuführungsleitung (33) in einem äußeren, achsfernen Bereich der Vorkammer (26) innerhalb der flüssigen Phase ($A_2$) auf einem vorbestimmten Radius (R) bezüglich der Rotationsachse (2) des Läufers liegt, welches Kühlmittelzuleitungssystem mit einer nachgeordneten, mitrotierenden Mischkammer (11) verbunden ist, die im Normalbetriebszustand der Maschine bei Unterdruck eine gasförmige und eine flüssige, die Erregerwicklung (4) kühlende Phase ($B_1$ bzw. $A_1$) des Kühlmittels enthält, und das eine Einrichtung zum Abbau des Druckunterschiedes zwischen der Vorkammer (26) und der Mischkammer (11) aufweist, dadurch gekennzeichnet,

a) daß eine ausschließlich flüssiges Kühlmittel ($A_3'$) führende Kühlmittelzuführungsleitung (33) feststehend in die Vorkammer (26) ragt, welche sich in Nähe der Läuferachse (2) befindet,

b) daß an der Einmündungsstelle (50) der feststehenden Kühlmittelzuführungsleitung (33) der hydrostatische Druck des zugeführten flüssigen Kühlmittels ($A_3'$) im Gleichgewicht mit dem Kühlmitteldruck des in der Vorkammer (26) im Normalbetriebszustand der Maschine mitrotierenden flüssigen Kühlmittels ($A_2$) ist und

c) daß die Einrichtung zum Druckabbau in dem Verbindungsweg (28, 16, 15) zwischen der Vorkammer (26) und der Mischkammer (11) angeordnet ist.

2. Nachfülleinrichtung nach Anspruch 1, dadurch gekennzeichnet, daß der Kühlmittelvorratsbehälter (29) geodätisch höher als die Vorkammer (26) angeordnet ist.

3. Nachfülleinrichtung nach Anspruch 1 oder 2, dadurch gekennzeichnet, daß ein Druckausgleich über mindestens eine Verbindungsleitung (36) zwischen dem mit gasförmigem Kühlmittel ($B_3$) gefüllten Gasraum des Vorratsbehälters (29) und dem achsnahen, mit gasförmigem Kühlmittel ($B_2$) gefüllten Gasraum der Vorkammer (26) vorgesehen ist.

4. Nachfülleinrichtung nach Anspruch 3, gekennzeichnet durch einen Druck von etwa 1,2 bar in dem Vorratsbehälter (29) und der Vorkammer (26).

5. Nachfülleinrichtung nach Anspruch 3 oder 4, dadurch gekennzeichnet, daß eine direkte Kühlmitteleinspeisung aus einer Kälteanlage (24) durch eine Kühlmittelleitung (42) in die Kühlmittelzuführungsleitung (33) und/oder die Druckausgleichsleitung (36) unter Umgehung des Vorratsbehälters (29) möglich ist.

6. Nachfülleinrichtung der Kühlanordnung nach einem der Ansprüche 1 bis 5, gekennzeichnet durch eine den radial äußeren Bereich der Vorkammer (26) mit einem am Außenumfang der supraleitenden Erregerwicklung (4) angeordneten Kühlmittelverteilersystem (14) verbindende Kühlmitteleinspeisungsleitung (28), durch zwischen dem Kühlmittelverteilersystem (14) und der Mischkammer (11) verlaufende Kühlkanäle (15) durch die Wicklungsteile der Erregerwicklung (4) sowie entsprechende Kühlmittelverbindungsleitungen (16) außerhalb der Wicklungsteile, und durch mindestens eine in Achsnähe der Mischkammer (11) angeschlossene Kühlmittelabführungsleitung (18; 19) zur Ableitung von gasförmigem Kühlmittel ($B_1'$) aus der Mischkammer (11) nach außen.

7. Nachfülleinrichtung einer Kühlanordnung nach Anspruch 6, gekennzeichnet durch eine Kühlung der supraleitenden Erregerwicklung (4) durch eine Zirkulationsströmung in Thermosiphon-Schleifen über das Kühlmittelverteilersystem (14), die Kühlkanäle (15) durch die Wicklungsteile der Erregerwicklung (4), die Mischkammer (11) und die Kühlmittelverbindungsleitungen (16) außerhalb der Wicklungsteile.

8. Nachfülleinrichtung einer Kühlanordnung nach einem der Ansprüche 5 bis 7, gekennzeichnet durch einen Druckabbau zwischen der Vorkammer (26) und der Mischkammer (11) mittels rotierender Kühlmittelsäulen radial außerhalb des Flüssigkeitsspiegels (27) in der Vorkammer (26) bzw. radial außerhalb des Flüssigkeitsspiegels (12) in der Mischkammer (11).

9. Nachfülleinrichtung nach einem der Ansprüche 1 bis 8, dadurch gekennzeichnet, daß der Spiegel (27) des flüssigen Kühlmittels ($A_2$) in der Vorkammer (26) durch eine Zwischenwand (52) gegenüber angrenzenden, sich auf größere Radien erstreckenden, mit dem Gasraum der Vorkammer (26) verbundenen Räumen seitlich begrenzt ist.

## Claims

1. A replenishing device for the cooling arrangement of a super-conducting excitation winding (4) in the rotor of an electric machine, in particular a turbogenerator, comprising a coolant supply system which contains a co-rotating preliminary chamber (26) which itself contains, in the normal operating state of the machine, a liquid and a gaseous phase ($A_2$ and $B_2$) of a coolant which is obtained from an external coolant feed container (29) and is introduced at excess pressure through a coolant supply line (33), the inlet point (50) of the coolant supply line (33) being located in an outer region of the preliminary chamber (26) remote from the axis, within the liquid phase ($A_2$) at a predetermined radius (R) relative to the axis of rotation (2) of the rotor, said coolant supply system being connected to a following, corotating mixing chamber (11) which, in the normal operating state of the machine, at reduced pressure, contains a gaseous and a liquid phase ($B_1$ and $A_1$) of the coolant, said liquid phase ($A_1$) of the mixing chamber cooling the excitation winding (4), and which coolant supply system is provided with a device which reduces the pressure difference between the preliminary chamber (26) and the mixing chamber (11), characterised in that

a) a coolant supply line (33) which carries only liquid coolant ($A_3'$) projects in fixed manner into the preliminary chamber (26) which is located in the vicinity of the rotor axis (2);

b) that at the inlet point (50) of the fixed coolant supply line (33), the hydrostatic pressure of the liquid coolant ($A_3'$) supplied is in equilibrium with the coolant pressure of the liquid coolant ($A_2$) which co-rotates in the preliminary chamber (26) when the machine is in the normal operating state; and

c) that the device which produces pressure reduction is arranged in the connection path (28, 16, 15) between the preliminary chamber (26) and the mixing chamber (11).

2. A replenishing device according to claim 1, characterised in that the coolant feed container (29) is arranged to be geodetically higher than the preliminary chamber (26).

3. A replenishing device according to claim 1 or 2, characterised in that a pressure equalisation is provided through at least one connecting line (36) between the gas space of the feed container (29), which is filled with gaseous coolant ($B_3$), and the gas space adjacent the axis of the preliminary chamber (26) which is filled with gaseous coolant ($B_2$).

4. A replenishing device according to claim 3, characterised by a pressure of approx. 1.2 bar in the feed container (29) and the preliminary chamber (26).

5. A replenishing device according to claim 3 or 4, characterised in that it is possible to directly feed coolant from a refrigerating system (24) through a coolant line (42) into the coolant supply line (33) and/or the pressure equalising line (36), by-passing the feed container (29).

6. A replenishing device of the cooling arrangement according to one of the claims 1 to 5, characterised by a coolant feed line (28) which connects the radially outer region of the preliminary chamber (26) to a coolant distributor system (14) arranged at the outer periphery of the super-conducting excitation winding (4); by cooling channels (15) running between the coolant distributor system (14) and the mixing chamber (11) through the winding components of the excitation windung (4) and corresponding coolant connection lines (16) externally of the winding components; and by at least one coolant discharge line (18; 19) which is connected in the vicinity of the axis of the mixing chamber (11) and which serves to discharge gaseous coolant ($B_1'$) from the mixing chamber (11) towards the outside.

7. A replenishing device of a cooling arrangement according to claim 6, characterised by a cooling of the super-conducting excitation winding (4) by a circulating flow in thermosiphon loops by way of the coolant distributor system (14), the cooling channels (15) through the winding components of the excitation winding (4), the mixing chamber (11) and the coolant connection lines (16) outside the winding components.

8. A replenishing device of a cooling arrangement according to one of claims 5 to 7, characterised by a pressure reduction between the preliminary chamber (26) and the mixing chamber (11) by means of rotating coolant columns radially outside the liquid level (27) in the preliminary chamber (26) and radially outside the liquid level (12) in the mixing chamber (11).

9. A replenishing device according to one of claims 1 to 8, characterised in that the level (27) of the liquid coolant (A$_2$) in the preliminary chamber (26) is laterally delimited by a partition wall (52) over against adjoining areas which extend over larger radii and which are connected to the gas space of the preliminary chamber (26).

**Revendications**

1. Dispositif de remplissage pour l'installation de refroidissement d'un enroulement d'excitation supraconducteur (4) situé dans le rotor d'une machine électrique, notamment turbo-alternateur, comportant un système d'amenée du fluide de refroidissement, incluant une chambre antérieure (26) entraînée également en rotation et dans laquelle une phase liquide et une phase gazeuse (A$_2$ et B$_2$) d'un fluide de refroidissement prélevé d'un réservoir extérieur (29) du fluide de refroidissement et introduit avec une surpression par l'intermédiaire d'une canalisation (33) d'amenée du fluide de refroidissement sont présentes lorsque la machine est dans son état normal de fonctionnement, le point d'arrivée (50) de la canalisation (33) d'amenée du fluide de refroidissement étant situé dans une zone extérieure, éloignée de l'axe, de la chambre antérieure (26), à l'intérieur de la phase liquide (A$_2$) à une distance radiale prédéterminée (R) par rapport à l'axe de rotation (2) du rotor, le système d'amenée du fluide de refroidissement étant relié à une chambre de mélange (11) également entraînée en rotation, disposée en aval et contenant, lorsque la machine est dans son état de fonctionnement normal, en présence d'une dépression, une phase gazeuse et une phase liquide du fluide de refroidissement, refroidissant l'enroulement d'excitation (4), (B$_1$ et A$_1$), et comportant un dispositif servant à supprimer la différence de pression entre la chambre antérieure (26) et la chambre de mélange (11), caractérisé par le fait que

a) une canalisation (33) d'amenée du fluide de refroidissement traversée exclusivement par un fluide de refroidissement liquide (A'$_3$), pénètre en position fixe dans la chambre antérieure (26), qui est située à proximité de l'axe (2) du rotor,

b) au niveau du point d'arrivée (50) de la canalisation fixe (33) d'amenée du fluide de refroidissement, la pression hydrostatique du fluide de refroidissement liquide (A'$_3$) amené est en équilibre avec la pression de fluide de refroidissement du fluide de refroidissement liquide (A$_2$) qui se trouve, dans la chambre antérieure (26) et qui est également entraîné en rotation, lorsque la machine est dans son état normal de fonctionnement, et

c) le dispositif pour la suppression de la pression est disposé dans la voie de liaison (28, 16, 15) entre la chambre antérieure (26) et la chambre de mélange (11).

2. Dispositif de remplissage suivant la revendication 1, caractérisé par le fait que le réservoir extérieur (29) du fluide de refroidissement est disposé dans une position géodésique plus élevée que la chambre antérieure (26).

3. Dispositif de remplissage suivant la revendication 1 ou 2, caractérisé par le fait qu'un équilibrage des pressions est prévu par l'intermédiaire d'au moins une canalisation de liaison (36) entre l'espace de gaz du réservoir extérieur (29), rempli par le fluide de refroidissement gazeux (B$_3$), et l'espace de gaz de la chambre antérieure (26), qui est proche de l'axe et est rempli par le fluide de refroidissement (B$_2$) gazeux.

4. Dispositif de remplissage suivant la revendication 3, caractérisé par une pression d'environ 1,2 bar dans le réservoir extérieur (29) et dans la chambre antérieure (26).

5. Dispositif de remplissage suivant la revendication 3 ou 4, caractérisé par le fait qu'une alimentation directe en fluide de refroidissement, à partir d'une installation frigorifique (24) et par une canalisation du fluide de refroidissement (42), dans la canalisation (33) d'amenée du fluide de refroidissement et/ou dans la canalisation (36) de compensation de pression, est possible par contournement du réservoir extérieur (29).

6. Dispositif de remplissage de l'installation de refroidissement suivant l'une des revendications 1 à 5, caractérisé par une canalisation (28) d'introduction du fluide de refroidissement reliant la zone radialement extérieure de la chambre antérieure (26) à un système (14) de répartition du liquide de refroidissement, disposé sur le pourtour extérieur de l'enroulement d'excitation supraconducteur (4), par des canaux de refroidissement (15) s'étendant entre le système (14) de répartition du fluide de refroidissement et de la chambre de mélange (11) à travers les parties de l'enroulement d'excitation (4) ainsi que par des canalisations correspondantes (16) de liaison pour le fluide de refroidissement à l'extérieur des parties de l'enroulement, et par au moins une canalisation (18, 19) d'évacuation du fluide de refroidissement raccordée à proximité de l'axe de la chambre de mélange (11) et servant à évacuer le fluide de refroidissement gazeux (B'$_1$) vers l'extérieur à partir de la chambre de mélange (11).

7. Dispositif de remplissage d'une installation de refroidissement suivant la revendication 6, caractérisé par un refroidissement de l'enroulement d'excitation supraconducteur (4) au moyen d'un courant de circulation dans des boucles à thermosiphon par l'intermédiaire du système (14) de répartition du fluide de refroidissement, des canaux de refroidissement (15) traversant les parties de l'enroulement d'excitation (4), de la chambre de mélange (11) et des canalisations (16) de liaison au fluide de refroidissement à l'extérieur des parties de l'enroulement.

8. Dispositif de remplissage d'une installation de refroidissement suivant l'une des revendications 5 à 7, caractérisé par une suppression de la pression entre la chambre antérieure (26) et la chambre de mélange (11), réalisée au moyen de colonnes tournantes de fluide de refroidissement situés radialement à l'extérieur du niveau (27) du liquide dans la chambre antérieure (26) ou radialement à l'extérieur du niveau (12) du liquide dans la chambre de mélange (11).

9. Dispositif de remplissage suivant l'une des revendications 1 à 8, caractérisé par le fait que le niveau (27) du fluide de refroidissement liquide ($A_2$) dans la chambre antérieure (26) est limitée latéralement par une paroi intermédiaire (52) par rapport à des espaces contigus qui s'étendent sur des rayons plus grands et qui sont reliés à l'espace à gaz de la chambre antérieure (26).